# EUROPEAN PATENT SPECIFICATION

(11) **EP 4 669 931 B1**
(45) Date of publication and mention of the grant of the patent: **12.08.2026**
(21) Application number: 24705693.0
(22) Date of filing: 21.02.2024
(51) Int. Cl.: G01C 11/02, G05D 1/00, G06T 7/579

(54) **METHOD FOR POSITIONING AND SCALING IMAGES IN A VIRTUAL TOUR OF A BUILDING**
VERFAHREN ZUR POSITIONIERUNG UND SKALIERUNG VON BILDERN IN EINER VIRTUELLEN GEBÄUDEBESICHTIGUNG
MÉTHODE DE POSITIONNEMENT ET DE MISE À L'ÉCHELLE DES IMAGES DANS UNE VISITE VIRTUELLE D'UN BÂTIMENT

(30) Priority: 23.02.2023 EP 23382167
(43) Date of publication of application: 31.12.2025
(73) Proprietor: Floorfy S.L., 08001 Barcelona (Barcelona) (ES)
(72) Inventor: JIMÉNEZ BARBÉ, Sergi, 08001 Barcelona (Barcelona) (ES); HERRERA GUARDIOLA, Dídac, 08001 Barcelona (Barcelona) (ES); ROTGER MOLL, Gemma, 08001 Barcelona (Barcelona) (ES); ALI, Sikander, 08001 Barcelona (Barcelona) (ES); MARTIN BALLESTEROS, Xavier, 08001 Barcelona (Barcelona) (ES)
(74) Representative: TRBL Intellectual Property
(86) International application number: PCT/EP2024/054430
(87) International publication number: WO 2024/175664

(56) References cited:
- EP-A2- 3 072 103
- WO-A1-2022/180459
- WO-A1-2022/187753
- US-A1- 2014 320 593
- US-A1- 2021 004 979
- US-A1- 2021 272 313
- AQEL MOHAMMAD O. A. ET AL: "Review of visual odometry: types, approaches, challenges, and applications", SPRINGERPLUS, vol. 5, no. 1, 28 October 2016 (2016-10-28), pages 1 - 26, XP055774948, DOI: 10.1186/s40064-016-3573-7

## Description

### TECHNICAL FIELD

The present invention relates to a system for capturing, positioning and referencing a series of images.

### STATE OF THE ART

Different systems for locating omnidirectional cameras within a map as a reference for scanning real estate are known, such as those described in documents US 10,303,979 B2, US 2020/364900 A1 or US 2019/250283 A1. These systems show different map referencing systems. These methods include, apart from the information obtained from the camera, other elements that allow its exact location.

The problem with the aforementioned documents is that, in case of misuse by the user in the positioning of the fiduciary elements, the positions can be incorrectly calculated and there is a possibility for the user to take some images which are not valid, and would need a repetition. In addition, image capture processes require the acquisition of a large number of high-resolution images, making the process slow and tedious for the user.

Simultaneous Localization And Mapping (SLAM) is a technique which allows the construction of a map of an unknown environment while simultaneously keeping track of the camera's location within it. There are many documents (see e.g. WO 2022/180459 A1 and US 2021/272313 A1) which describe the details of different methods associated with this technique. However, SLAM does not provide any hint about the real dimensions of the entities contained in the captured images.

Other methods prior to the invention made use of added elements to the omnidirectional image capture, such as GPS sensors, fiduciary elements (QR codes), and/or direct three-dimensional measurement sensors. The invention presented in this document does not require any additional element for its correct operation and is aimed to provide, not only the map, but a dimensional positioning of the images used to create such a map.

### DESCRIPTION OF THE INVENTION

The invention provides an alternative solution for this problem by means of a method according to claim 1 and a system according to claim 13. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for positioning a plurality of images, the method comprising the steps of
providing an image acquisition device and a control unit;
the image acquisition device performs a reference shot, thus obtaining a position reference and a reference keyframe;
the control unit identifies a plurality of keypoints in the reference keyframe;
the image acquisition device performs a plurality of secondary shots, thus obtaining a plurality of secondary images with a data size, wherein after each secondary shot, the control unit identifies at least one keypoint in the corresponding secondary image, wherein the secondary image is classified as a keyframe if the keypoints included in the secondary image satisfy a relevance criterion;
the control unit establishes a positional relation between each keyframe and the reference image by the identification of common keypoints between the keyframes;
performing a main shot with the image acquisition device, thus obtaining a main image with a data size which is greater than or equal to the data size of every secondary image, wherein the image acquisition device is still and supported when performing the main shot, wherein the secondary shot which is performed immediately before the main shot is also classified as a keyframe associated to the main image;
repeating the steps of performing secondary shots, establishing the position relation and performing a main shot until a final number of main shots are obtained, wherein after these steps, a plurality of main shots and a plurality of keyframes are obtained, wherein each main shot has an associated keyframe and wherein all the keyframes have a position relation with respect to the reference keyframe;
the control unit performs a pixel depth inference in at least one of the keyframes, thus obtaining, for each keyframe where the pixel depth inference is performed, a depth file which comprises, for at least some pixels of the keyframe, pixel data and depth data;
the control unit uses the depth file to provide a metric scale for the pixels of the at least one keyframe for which the pixel depth inference has been performed;
the control unit uses the metric scale obtained for the pixels of at least one keyframe to provide a global metric scale which provides the scaled position of all the keyframes, thus providing the scaled position of all the main images.

In this method, a plurality of main shots are taken, thus obtaining a plurality of main images, e.g., a first main image, a second main image, a third main image and a fourth main image. A reference shot is also taken, usually before the first main shot. This reference shot may be simultaneous with the first main shot or with one of the secondary shots that will be described afterwards. Hence, there are different ways of providing the position of the first main image with respect to the reference image.

A plurality of secondary shots is taken before every main shot so that every main shot is "connected" with the previous main shot (and finally to the reference shot) by means of a plurality of secondary shots, which has been taken previously to the corresponding main shot.

This method does not prevent the user from taking additional main shots that do not have the corresponding associated secondary shots. The key feature is that there is a plurality of relevant main shots that have secondary shots taken before them: a plurality of secondary shots before the first main shot, a plurality of secondary shots between the first and second main shots, a plurality of secondary shots between the second and the third main shots and a plurality of secondary shots between the third and the fourth secondary shots. Apart from the main shots which comprise secondary shots between them, nothing prevents the user from taking further main shots just for the sake of reliability or any other reason. The fact is that the method defines the acquisition of several main shots and the acquisition of secondary shots before each one, regardless of the user taking additional irrelevant main shots without secondary shots between them (such as redundant main shots or main shots in a zone which is already characterized by a sufficient number of secondary shots). The secondary shots have a data size which is equal to or lower than the data size of the main shots. This may be caused by different features. For instance, in some particular embodiments, the greater data size of the main image is due to the fact that the image resolution of the secondary images is lower than the resolution of the main images. For example, the resolution of the secondary images may be equal to or lower than 1024x512 pixels, while the resolution of the main images is equal to or greater. In other embodiments, the greater data size of the main image is due to the fact that the main images are high dynamic range images, and this involves the capturing of a plurality of images of the same scene with different exposures to combine them in the high dynamic range image.

For each image, the control unit identifies a plurality of keypoints in each secondary image (and also in the reference image). This means that the control unit identifies objects in each image which, due to contrast changes or any other relevant feature, may be used to track the movement of the image acquisition device: for example, the control unit detects a corner in a room or a window in the reference image, and then searches for the same object in the following images, and further searches for new objects that may be used as keypoints. This allows the control unit to label keypoints in each secondary image so that the secondary images are potentially located with respect to the previous ones and, in the last term, to the reference image.

However, not all the secondary images are relevant, since many of them may be redundant, depending on the movement of the user with the camera and depending on the complexity of the room to be scanned.

Hence, some of the secondary images are selected as keyframes. The criterion for selecting a secondary image as a keyframe is related to the relevance of the keypoints contained therein. If a secondary image contains a number of keypoints in common with the previous image and a relevant number of new keypoints which will allow the relation with subsequent keyframes, it is selected as a keyframe. Also, the secondary image which is captured immediately before a main image is also selected as a keyframe, and becomes the keyframe associated with this main image. This will be used to transfer the properties of location, position, orientation and metric scale (that will be calculated later) to the associated main image, since these properties are only calculated for secondary images (and in some cases, only for some of them), not for main images. The reason is that the main images have better quality (and bigger data size) and it is advantageous to calculate the properties for a lower-sized image, which will involve a lower computing cost, enabling the capture and processing of the virtual tour in real-time in a mobile device.

After selecting the plurality of keyframes, a pixel depth inference is performed in at least one of the keyframes. This step may be performed on an intermediate keyframe, on the keyframe associated with the first main image, or with the keyframe associated with any intermediate main image, or on one or more intermediate keyframes. The more keyframes, the better the accuracy of the pixel depth inference (and the better performance of the steps related to this pixel depth inference), but also the higher computing cost. Hence, the number of keyframes for which the depth inference is performed will be chosen depending on the computing power of the control unit.

The pixel depth inference is a process that aims to obtain an inferred depth value for at least some of the pixels of an image. Hence, the result of this process is a depth file which contains, for each pixel, a depth value. This is used to obtain a metric scale for the image.

Hence, after this pixel depth inference is done, the keyframes that have received the pixel depth inference (at least one of them) will have a metric scale. At this stage, a global metric scale is calculated to be applied to all of the positions of the keyframes. The calculation of this global scale depends on the number of keyframes that have their own metric scale. In any case, the global metric scale contains the scaled position of the whole set of keyframes, so that the relative metric position of each keyframe with respect to the reference shot is obtained. Since the keyframes associated with the main images are part of the set of keyframes, they will receive this global metric scale, so all the main images will be positioned and oriented, according to the global metric scale, with respect to the reference image.

The depth inference is performed over at least some of the pixels of the keyframe. This is done because the depth inference is a costly process in terms of computing cost, and not all the pixels of a keyframe are relevant. Hence, only those pixels for which the depth inference is made will provide a metric scale within the image. In some particular embodiments, the method comprises a further step of calculating the depth inference for all the pixels of the keyframe, so that a complete metric scale is obtained.

In some particular embodiments, the step of performing a pixel depth inference is performed on every keyframe which is associated with one of the main images.

In some particular embodiments, the global metric scale is obtained by selecting a specific group of the keyframes for which the pixel depth inference has been performed and applying statistical operators to the metric scales of the specific group of keyframes, thus obtaining the global metric scale.

The global metric scale is obtained, in these cases, by applying some statistical operators to the particular metric scale obtained for at least some of the keyframes. However, it is possible that some scales are incorrect or clearly out of range. The control unit has the discretion to disregard those data which are, e.g., far from the mean value, so that the data used to calculate the global scale are reliable data.

In some particular embodiments, the step of selecting a specific group of keyframes is performed based on the content of the keyframes and/or on the depth of the pixels of the keyframes.

The content of the keyframes (e.g., the fact that some objects may be outdoors) or the depth values (very far from the mean value) may be used as a criterion for belonging or not to the specific group of keyframes.

In some particular embodiments, the image acquisition device is a 360° camera or any other device capable of obtaining 360° images.

A 360° camera allows the user to take an omnidirectional image with a single shot, but other devices may be used to take images which can be transformed into a 360° image.

In some particular embodiments, the main images are 360° images.

These images may be captured by the 360° camera. In some particular embodiments, the acquisition device is configured to capture rectangular images or spherical (360°) images. Hence, in some particular embodiments, this device is configured to capture 360° images for main images and rectangular images for secondary images.

In some particular embodiments, the step of performing a plurality of secondary shots with the image acquisition device is carried out by performing a stream and selecting some frames of the stream which become the secondary images.

A stream can be ordered in the vast majority of image acquisition devices. The control unit or any other automatic rule may select relevant frames of the stream, thus becoming the secondary images.

In some particular embodiments, the image acquisition device is configured to acquire a preview dataset and the stream comprises images of the preview.

Some image acquisition devices have a functionality which allows the device to obtain a preview. This preview is composed of the camera live images, continuously and directly capturing what the camera views in real-time or quasi-real-time. Advantageously, the preview provides information which can be easily treated as the stream: key frames may be extracted from the preview to become the secondary images.

In some particular embodiments, the method comprises the steps of performing at least one secondary shot per second. In some particular embodiments, the method comprises the steps of performing at least ten secondary shots per second.

One secondary shot per second is enough for the vast majority of cases to create the necessary number of secondary images to position the next main image with respect to the position reference. Ten secondary shots per second ensure that the keypoints are captured regardless of the movement of the user.

In some particular embodiments, the steps of identifying the plurality of keypoints in the secondary shots and the steps of selecting a secondary shot as a keyframe are performed in real-time; i.e., before taking the next secondary shot.

The secondary images are used to provide the necessary data to calculate the location of the main images with respect to the position reference. Hence, they need to be sent to the control unit, but this sending operation may be performed at any time. However, when these operations are made in real-time, the control unit has the ability to detect if the connection is lost. This "real-time" connection allows the control unit to detect a connection loss rapidly enough to warn the user to re-position the image acquisition device in the last known position. This feedback provided to the user in real-time comprises an inventive aspect in the capture of real estate virtual tour properties.

In a further inventive aspect, the invention provides a system for performing the operations of a method according to the first inventive aspect, the system comprising
an image acquisition device configured for performing main shots and secondary shots; and
a control unit configured to perform the steps of identifying keypoints in the secondary images, establishing a positional relation between each keyframe and the reference image, performing a pixel depth inference in at least one of the keyframes and using the depth file to provide a metric scale for the pixels of the at least one keyframe and to provide a global metric scale for all the keyframes in a method according to the first inventive aspect.

In some particular embodiments, the system further comprises a mobile device, wherein the control unit is comprised in the mobile device.

The control unit may receive the images by any means, including a physical connection or a wireless connection. Hence, the control unit may be located in a separate mobile device, such as a mobile phone or a tablet.

### BRIEF DESCRIPTION OF THE DRAWINGS

To complete the description and in order to provide a better understanding of the invention, a set of drawings is presented. The forenamed drawings form an integral part of the description and illustrate an embodiment of the invention, which should not be interpreted as restricting the scope of the invention, but just as an example of how the invention can be carried out. The drawings comprise the following figures:
Figure 1 shows a system to be used in a method according to the invention.
Figure 2 shows a user moving the camera in some steps of a method according to the invention.
Figure 3 shows further steps of a method according to the invention.
Figure 4 shows an example of a plan view of the evolution of the camera in a method according to the invention.

In these figures, the following reference numbers have been used:
- 1: Location of the first main image
- 2: Location of the second main image
- 3: Location of the third main image
- 4: Location of the fourth main image
- 5: Location of a secondary image
- 6: Control unit
- 7: User
- 8: Camera

### DETAILED DESCRIPTION OF THE INVENTION

The exemplary embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit the scope of protection to the particular disclosed forms. On the contrary, all modifications, equivalents, and alternatives falling within the scope of the appended claims should be included. Elements of the example embodiments are consistently denoted by the same reference numerals throughout the drawings and detailed descriptions where appropriate.

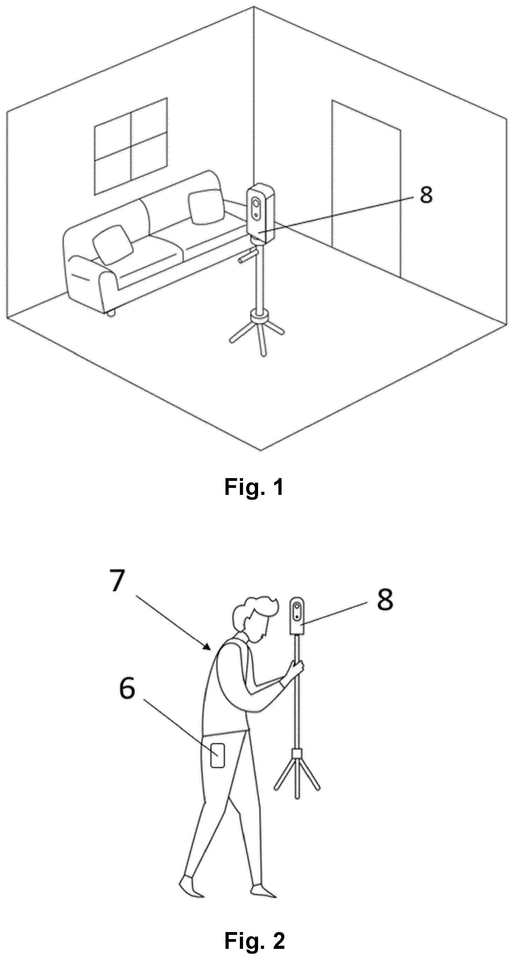

Figure 1 shows a system to be used in a method according to the invention. This system comprises a 360° camera 8 and a control unit comprised in a mobile device (not shown in this figure).

The 360° camera 8 is configured to perform main shots with a first resolution and a stream of previews with a second resolution lower than the first resolution. This 360° camera 8 has means for sending information to the control unit. This means can be wireless means of any type, and will normally be a connection via the internet.

The first step of this method involves a reference shot. This reference shot is the first image of a preview of the camera. The preview is activated and the first image of this preview is used as a reference keyframe, since the position of the camera when starting the preview is a good starting point to refer to the future main images. With this preview starts the capturing of secondary images, which will be continuous until the halt of the preview stream. The acquisition rate may vary from 1 image per second to 30 images per second, depending on the computing capacity of the control unit, being 10 images per second the preferred configuration.

While secondary images are being captured, the control unit identifies a plurality of keypoints in each secondary image (and also in the reference keyframe). This allows the control unit to label keypoints in each secondary image so that the secondary images are potentially located with respect to the previous ones and, in the last term, to the reference keyframe.

Some of the secondary images are selected as keyframes. The criterion for selecting a secondary image as a keyframe is related to the relevance of the keypoints contained therein. From all the secondary images which are captured from the start of the preview to the first main shot, the secondary image which is immediately before the first main shot is chosen as the keyframe associated with the first main image. The reason is that main images have better quality (and bigger data size) and it is advantageous to calculate the properties for a lower-sized image, which will involve a lower computational cost.

This first main shot is a complete 360° image with the first resolution. This first image, as shown in this figure, can be, for example, a 360° image of the living room of a house, or of a main space of an office.

The secondary shots (including the reference shot) may produce 360° images or standard rectangular images, while all the main shots produce 360° images. However, this is not a problem, since the selection of keyframes only includes secondary images.

Figure 2 shows a user 7 which is moving the camera from the point where the first main image has been taken to a place where a second main image is going to be acquired. This user carries the mobile phone with the control unit 6.

During all the time the camera 8 is being moved, the operation of capturing secondary images, selecting the keypoints and classifying some of the secondary images as keyframes as a function of the relevance of the keypoints is then repeated until arriving at the second location.

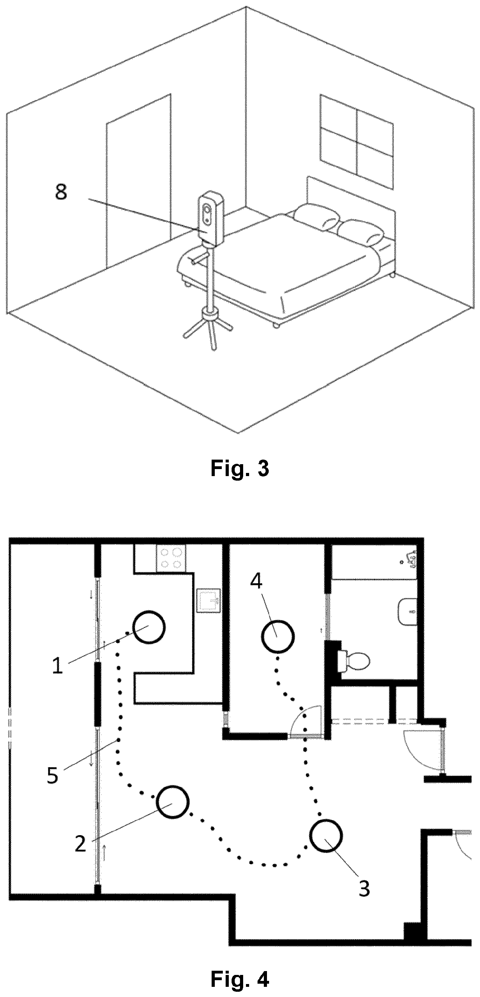

Figure 3 shows the user that has arrived at a different room and sets the camera 8 for the second main image. Due to the process carried out by the control unit, the second main image can be perfectly positioned with respect to the position reference at the same moment that is acquired. To be accurate, it is not the main image which is positioned, but the secondary image associated with its main image, since only the secondary images take part in the process of identifying the keypoints and selecting some secondary images as keyframes.

This process can be repeated with any number of main images. The camera 8 captures a stream of images so that the control unit knows perfectly where the camera is with respect to the reference position with the point cloud information that is created from the secondary images which are received. Hence, when a main image is taken, it is immediately positioned with respect to the reference keyframe.

Figure 4 shows an example of a plan view of the evolution of the camera in a method according to the invention.

In this figure, the camera has taken four main images and a stream containing a plurality of secondary images. The location where the camera has taken the first images 1, 2, 3, 4 is shown by circles in the figure. Further, the location corresponding to the keyframes is shown by small dots 5 in the figure.

After selecting the plurality of keyframes, a pixel depth inference is performed in at least one of the keyframes. This step may be performed on the keyframe associated with the first main image, or with the keyframe associated with any intermediate main image, or to one or more intermediate keyframes. The more keyframes, the better the accuracy of the pixel depth inference (and the better performance of the steps related to this pixel depth inference), but also the higher computing cost. Hence, the number of keyframes will be chosen depending on the computing power of the control unit.

The pixel depth inference is a process that aims to obtain an inferred depth value for at least some pixels of an image. Depending on the computing power of the control unit, this process is made of only some of the pixels, almost all pixels or directly over all the pixels of the selected keyframe. Hence, the result of this process is a metric point cloud which contains, for each pixel for which the process is done, a depth value. This processing can be done by a machine learning algorithm, which is trained with images of interior spaces to recognize the depth of some points and therefore, assigning a metric value to each pixel. Hence, after this pixel depth inference is done, the keyframes that have received the depth inference will have a metric point cloud. This metric point cloud only contains those pixels for which the depth inference has been made.

In the event there are more than one keyframe for which the pixel depth inference is done, a global metric scale is obtained. This can be done by selecting a specific group of the metric scales and using some statistical operators on them to obtain the global metric scale.

On the other side, each keyframe has a reference to an arbitrary point cloud, which is defined by the control unit when assigning keypoints to the reference keyframe. This arbitrary point cloud does not have a metric scale, but by matching the points of the global metric point cloud with the points of the arbitrary point cloud, a global metric scale will be provided to the arbitrary point cloud, thus providing a metric scale for the keyframes associated to each main image. The metric scale allows the positioning of each keyframe with respect to the reference position and then, with respect to each other.

## Claims

1. Method for positioning a plurality of images, the method comprising the steps of
providing an image acquisition device (8) and a control unit (6);
the image acquisition device (8) performs a reference shot, thus obtaining a position reference and a reference keyframe;
the control unit identifies a plurality of keypoints in the reference keyframe;
the image acquisition device (8) performs a plurality of secondary shots, thus obtaining a plurality of secondary images with a data size, wherein after each secondary shot, the control unit identifies at least one keypoint in the corresponding secondary image, wherein the secondary image is classified as a keyframe if the keypoints included in the secondary image satisfy a relevance criterion;
the control unit (6) establishes a positional relation between each keyframe and the reference image by the identification of common keypoints between the keyframes;
performing a main shot (2, 3, 4) with the image acquisition device, thus obtaining a main image with a data size which is greater than or equal to the data size of every secondary image, wherein the image acquisition device is still and supported when performing the main shot, wherein the secondary shot which is performed immediately before the main shot is also classified as a keyframe associated to the main image;
repeating the steps of performing secondary shots, establishing the position relation and performing a main shot until a final number of main shots are obtained, wherein after these steps, a plurality of main shots and a plurality of keyframes are obtained, wherein each main shot has an associated keyframe and wherein all the keyframes have a position relation with respect to the reference keyframe;
the control unit (6) performs a pixel depth inference in at least one of the keyframes, thus obtaining, for each keyframe where the pixel depth inference is performed, a depth file which comprises, for at least some pixels of the keyframe, pixel data and depth data;
the control unit (6) uses the depth file to provide a metric scale for the pixels of the at least one keyframe for which the pixel depth inference has been performed;
the control unit (6) uses the metric scale obtained for the pixels of at least one keyframe to provide a global metric scale which provides the scaled position of all the keyframes, thus providing the scaled position of all the main images.

2. Method according to any of the preceding claims, wherein the main images have a greater data size than the secondary images due to the fact that the image resolution of the secondary images is lower than the image resolution of the main images.

3. Method according to any of the preceding claims, wherein the main images have a greater data size than the secondary images due to the fact that the main images are high dynamic range images.

4. Method according to any of the preceding claims, wherein the step of performing a pixel depth inference is performed to a plurality of keyframes, thus obtaining one metric scale for each of the keyframes for which the pixel depth inference has been performed.

5. Method according to claim 4, wherein the step of performing a pixel depth inference is performed to every keyframe which is associated with one of the main images.

6. Method according to any of claims 4 or 5, wherein the global metric scale is obtained by selecting a specific group of the keyframes for which the pixel depth inference has been performed and applying statistical operators to the metric scales of the specific group of keyframes, thus obtaining the global metric scale.

7. Method according to claim 6, wherein the step of selecting a specific group of keyframes is performed based on the content of the keyframes and/or on the depth of the pixels of the keyframes.

8. Method according to any of the preceding claims, wherein the image acquisition device (8) is a 360° camera or any other device capable of obtaining 360° images, and wherein the main images are 360° images.

9. Method according to any of the preceding claims, wherein the step of performing a plurality of secondary shots with the image acquisition device is carried out by performing a stream and selecting some frames of the stream, wherein the selected frames become the secondary images.

10. Method according to claim 9, wherein the image acquisition device is configured to acquire a preview dataset and the stream comprises images of the preview.

11. Method according to any of the preceding claims, wherein the method comprises the steps of performing at least ten secondary shots per second.

12. Method according to any of the preceding claims, wherein the steps of identifying the plurality of keypoints in the secondary shots and the steps of selecting a secondary shot as a keyframe are performed in real-time; i.e., before taking the next secondary shot.

13. System for performing the operations of a method according to any of the preceding claims, the system comprising
an image acquisition device (8) configured for performing main shots and secondary shots; and
a control unit (6) configured to perform the steps of identifying keypoints in the secondary images, establishing a positional relation between each keyframe and the reference image, performing a pixel depth inference in at least one of the keyframes and using the depth file to provide a metric scale for the pixels of the at least one keyframe and provide a global metric scale for all the keyframes in a method according to any of the preceding claims.

14. System according to claim 13, which further comprises a mobile device, wherein the control unit is comprised in the mobile device.

## Patentansprüche

1. Verfahren zum Positionieren einer Vielzahl von Bildern, wobei das Verfahren folgende Schritte umfasst:
Bereitstellen einer Bilderfassungsvorrichtung (8) und einer Steuereinheit (6);
Durchführen einer Referenzaufnahme durch die Bilderfassungsvorrichtung (8), wodurch eine Positionsreferenz und ein Referenzschlüsselframe gewonnen werden;
Identifizieren einer Vielzahl von Schlüsselpunkten im Referenzschlüsselframe durch die Steuereinheit;
Durchführen einer Vielzahl von Sekundäraufnahmen durch die Bilderfassungsvorrichtung (8), wodurch eine Vielzahl von Sekundärbildern mit einer Datengröße erhalten wird, wobei die Steuereinheit nach jeder Sekundäraufnahme mindestens einen Schlüsselpunkt im entsprechenden Sekundärbild identifiziert, wobei das Sekundärbild als Schlüsselframe klassifiziert wird, falls die Schlüsselpunkte, die in dem Sekundärbild enthalten sind, ein Relevanzkriterium erfüllen;
Festlegen einer Positionsbeziehung zwischen jedem Schlüsselframe und dem Referenzbild durch die Steuereinheit (6) anhand der Identifizierung gemeinsamer Schlüsselpunkte zwischen den Schlüsselframes;
Durchführen einer Hauptaufnahme (2, 3, 4) mit der Bilderfassungsvorrichtung, wodurch ein Hauptbild mit einer Datengröße erhalten wird, die größer oder gleich der Datengröße jedes Sekundärbildes ist, wobei die Bilderfassungsvorrichtung bei der Durchführung der Hauptaufnahme stillsteht und abgestützt ist, wobei die unmittelbar vor der Hauptaufnahme durchgeführte Sekundäraufnahme ebenfalls als ein Schlüsselframe klassifiziert wird, das dem Hauptbild zugeordnet ist;
Wiederholen der Schritte des Durchführens von Sekundäraufnahmen, des Festlegens der Positionsbeziehung und des Durchführens einer Hauptaufnahme, bis eine endgültige Anzahl von Hauptaufnahmen erhalten wird, wobei nach diesen Schritten eine Vielzahl von Hauptaufnahmen und eine Vielzahl von Schlüsselframes erhalten wird, wobei jeder Hauptaufnahme ein zugeordnetes Schlüsselframe aufweist und wobei alle Schlüsselframes eine Positionsbeziehung in Bezug auf das Referenzschlüsselframe aufweisen;
Durchführen einer Pixeltiefeninferenz durch die Steuereinheit (6) in mindestens einem der Schlüsselframes, wodurch für jeden Schlüsselframe, in dem die Pixeltiefeninferenz durchgeführt wird, eine Tiefendatei erhalten wird, die für mindestens einige Pixel des Schlüsselframes Pixeldaten und Tiefendaten umfasst;
Verwenden der Tiefendatei durch die Steuereinheit (6), um eine metrische Skala für die Pixel des mindestens einen Schlüsselframes bereitzustellen, für den die Pixeltiefeninferenz durchgeführt wurde;
Verwenden der für die Pixel mindestens eines Schlüsselframes erhaltenen Metrikskala durch die Steuereinheit (6), um eine globale Metrikskala bereitzustellen, die die skalierte Position aller Schlüsselframes bereitstellt, wodurch die skalierte Position aller Hauptbilder bereitgestellt wird.

2. Verfahren nach einem der vorhergehenden Ansprüche, wobei die Hauptbilder eine größere Datengröße aufweisen als die Sekundärbilder, aufgrund der Tatsache, dass die Bildauflösung der Sekundärbilder geringer ist als die Bildauflösung der Hauptbilder.

3. Verfahren nach einem der vorhergehenden Ansprüche, wobei die Hauptbilder eine größere Datengröße aufweisen als die Sekundärbilder, aufgrund der Tatsache, dass die Hauptbilder Bilder mit hohem Dynamikbereich sind.

4. Verfahren nach einem der vorhergehenden Ansprüche, wobei der Schritt des Durchführens einer Pixeltiefeninferenz an einer Vielzahl von Schlüsselframes durchgeführt wird, wodurch für jeden der Schlüsselframes, für die die Pixeltiefeninferenz durchgeführt wurde, eine Metrikskala erhalten wird.

5. Verfahren nach Anspruch 4, wobei der Schritt des Durchführens einer Pixeltiefeninferenz für jeden Schlüsselframe durchgeführt wird, der einem der Hauptbilder zugeordnet ist.

6. Verfahren nach einem der Ansprüche 4 oder 5, wobei die globale Metrikskala erhalten wird, indem eine spezifische Gruppe der Schlüsselframes ausgewählt wird, für die die Pixeltiefeninferenz durchgeführt wurde, und indem statistische Operatoren auf die Metrikskalen der spezifischen Gruppe von Schlüsselframes angewendet werden, wodurch die globale Metrikskala erhalten wird.

7. Verfahren nach Anspruch 6, wobei der Schritt des Auswählens einer spezifischen Gruppe von Schlüsselframes basierend auf dem Inhalt der Schlüsselframes und/oder der Tiefe der Pixel der Schlüsselframes durchgeführt wird.

8. Verfahren nach einem der vorhergehenden Ansprüche, wobei die Bilderfassungsvorrichtung (8) eine 360°-Kamera oder eine beliebige andere Vorrichtung ist, die in der Lage ist, 360°-Bilder zu erhalten, und wobei die Hauptbilder 360°-Bilder sind.

9. Verfahren nach einem der vorhergehenden Ansprüche, wobei der Schritt des Durchführens einer Vielzahl von Sekundäraufnahmen mit der Bilderfassungsvorrichtung dadurch erfolgt, dass ein Stream durchgeführt und einige Frames des Streams ausgewählt werden, wobei die ausgewählten Frames zu den Sekundärbildern werden.

10. Verfahren nach Anspruch 9, wobei die Bilderfassungsvorrichtung dazu konfiguriert ist, einen Vorschau-Datensatz zu erfassen, und der Stream Bilder der Vorschau umfasst.

11. Verfahren nach einem der vorhergehenden Ansprüche, wobei das Verfahren die Schritte des Durchführens von mindestens zehn Sekundäraufnahmen pro Sekunde umfasst.

12. Verfahren nach einem der vorhergehenden Ansprüche, wobei die Schritte des Identifizierens der Vielzahl der Schlüsselpunkte in den Sekundäraufnahmen und die Schritte des Auswählens einer Sekundäraufnahme als Schlüsselframe in Echtzeit durchgeführt werden, d. h. vor der Aufnahme der nächsten Sekundäraufnahme.

13. System zum Durchführen der Vorgänge eines Verfahrens nach einem der vorhergehenden Ansprüche, wobei das System Folgendes umfasst:
eine Bilderfassungsvorrichtung (8), die dazu konfiguriert ist, Haupt- und Sekundäraufnahmen durchzuführen; und
eine Steuereinheit (6), die dazu konfiguriert ist, die Schritte des Identifizierens von Schlüsselpunkten in den Sekundäraufnahmen, des Festlegens einer Positionsbeziehung zwischen jedem Schlüsselframe und dem Referenzbild, des Durchführens einer Pixeltiefeninferenz in mindestens einem der Schlüsselframes und des Verwendens der Tiefendatei zum Bereitstellen einer Metrikskala für die Pixel des mindestens einen Schlüsselframes und zum Bereitstellen einer globalen Metrikskala für alle Schlüsselframes in einem Verfahren nach einem der vorhergehenden Ansprüche durchzuführen.

14. System nach Anspruch 13, das ferner eine mobile Vorrichtung umfasst, wobei die Steuereinheit in der mobilen Vorrichtung umfasst ist.

## Revendications

1. Procédé de positionnement d'une pluralité d'images, le procédé comprenant les étapes consistant à
fournir un dispositif d'acquisition d'images (8) et une unité de commande (6) ;
le dispositif d'acquisition d'images (8) effectue une prise de vue de référence, obtenant ainsi une référence de position et une image clé de référence ;
l'unité de commande identifie une pluralité de points clés dans l'image clé de référence ;
le dispositif d'acquisition d'images (8) effectue une pluralité de prises de vue secondaires, obtenant ainsi une pluralité d'images secondaires ayant une taille de données, dans lequel, après chaque prise de vue secondaire, l'unité de commande identifie au moins un point clé dans l'image secondaire correspondante, dans lequel l'image secondaire est classée comme une image clé si les points clés inclus dans l'image secondaire satisfont à un critère de pertinence ;
l'unité de commande (6) établit une relation de position entre chaque image clé et l'image de référence par l'identification de points clés communs entre les images clés ;
effectuer une prise de vue principale (2, 3, 4) au moyen du dispositif d'acquisition d'images, obtenant ainsi une image principale ayant une taille de données supérieure ou égale à la taille de données de chaque image secondaire, dans lequel le dispositif d'acquisition d'images est immobile et supporté lors de l'exécution de la prise de vue principale, dans lequel la prise de vue secondaire effectuée immédiatement avant la prise de vue principale est également classée comme une image clé associée à l'image principale ;
répéter les étapes d'exécution de prises de vue secondaires, d'établissement de la relation de position et d'exécution d'une prise de vue principale jusqu'à l'obtention d'un nombre final de prises de vue principales, dans lequel, après ces étapes, une pluralité de prises de vue principales et une pluralité d'images clés sont obtenues, dans lequel chaque prise de vue principale possède une image clé associée et dans lequel toutes les images clés ont une relation de position par rapport à l'image clé de référence ;
l'unité de commande (6) effectue une inférence de profondeur de pixel dans au moins une des images clés, obtenant ainsi, pour chaque image clé dans laquelle l'inférence de profondeur de pixel est effectuée, un fichier de profondeur qui comprend, pour au moins certains pixels de l'image clé, des données de pixel et des données de profondeur ;
l'unité de commande (6) utilise le fichier de profondeur pour fournir une échelle métrique pour les pixels de l'au moins une image clé pour laquelle l'inférence de profondeur de pixel a été effectuée ;
l'unité de commande (6) utilise l'échelle métrique obtenue pour les pixels d'au moins une image clé afin de fournir une échelle métrique globale qui fournit la position mise à l'échelle de toutes les images clés, fournissant ainsi la position mise à l'échelle de toutes les images principales.

2. Procédé selon l'une quelconque des revendications précédentes, dans lequel les images principales ont une taille de données supérieure à celle des images secondaires du fait que la résolution d'image des images secondaires est inférieure à la résolution d'image des images principales.

3. Procédé selon l'une quelconque des revendications précédentes, dans lequel les images principales ont une taille de données supérieure à celle des images secondaires du fait que les images principales sont des images à grande plage dynamique.

4. Procédé selon l'une quelconque des revendications précédentes, dans lequel l'étape d'exécution d'une inférence de profondeur de pixel est effectuée sur une pluralité d'images clés, obtenant ainsi une échelle métrique pour chacune des images clés pour lesquelles l'inférence de profondeur de pixel a été effectuée.

5. Procédé selon la revendication 4, dans lequel l'étape d'exécution d'une inférence de profondeur de pixel est effectuée sur chaque image clé associée à l'une des images principales.

6. Procédé selon l'une quelconque des revendications 4 ou 5, dans lequel l'échelle métrique globale est obtenue en sélectionnant un groupe spécifique des images clés pour lesquelles l'inférence de profondeur de pixel a été effectuée et en appliquant des opérateurs statistiques aux échelles métriques du groupe spécifique d'images clés, obtenant ainsi l'échelle métrique globale.

7. Procédé selon la revendication 6, dans lequel l'étape de sélection d'un groupe spécifique d'images clés est effectuée sur la base du contenu des images clés et/ou de la profondeur des pixels des images clés.

8. Procédé selon l'une quelconque des revendications précédentes, dans lequel le dispositif d'acquisition d'images (8) est une caméra à 360° ou tout autre dispositif capable d'obtenir des images à 360°, et dans lequel les images principales sont des images à 360°.

9. Procédé selon l'une quelconque des revendications précédentes, dans lequel l'étape d'exécution d'une pluralité de prises de vue secondaires au moyen du dispositif d'acquisition d'images est réalisée en effectuant un flux et en sélectionnant certaines trames du flux, les trames sélectionnées devenant les images secondaires.

10. Procédé selon la revendication 9, dans lequel le dispositif d'acquisition d'images est configuré pour acquérir un ensemble de données d'aperçu et le flux comprend des images de l'aperçu.

11. Procédé selon l'une quelconque des revendications précédentes, dans lequel le procédé comprend l'étape consistant à effectuer au moins dix prises de vue secondaires par seconde.

12. Procédé selon l'une quelconque des revendications précédentes, dans lequel les étapes d'identification de la pluralité de points clés dans les prises de vue secondaires et les étapes de sélection d'une prise de vue secondaire en tant qu'image clé sont effectuées en temps réel, c'est-à-dire avant la prise de la prise de vue secondaire suivante.

13. Système destiné à effectuer les opérations d'un procédé selon l'une quelconque des revendications précédentes, le système comprenant
un dispositif d'acquisition d'images (8) configuré pour effectuer des prises de vue principales et des prises de vue secondaires ; et
une unité de commande (6) configurée pour effectuer les étapes d'identification de points clés dans les images secondaires, d'établissement d'une relation de position entre chaque image clé et l'image de référence, d'exécution d'une inférence de profondeur de pixel dans au moins une des images clés et d'utilisation du fichier de profondeur afin de fournir une échelle métrique pour les pixels de l'au moins une image clé et de fournir une échelle métrique globale pour toutes les images clés dans un procédé selon l'une quelconque des revendications précédentes.

14. Système selon la revendication 13, comprenant en outre un dispositif mobile, dans lequel l'unité de commande est comprise dans le dispositif mobile.
